# EUROPÄISCHE PATENTSCHRIFT

(11) **EP 0 326 860 B1**
(45) Veröffentlichungstag und Bekanntmachung des Hinweises auf die Patenterteilung: **28.07.1993**
(21) Anmeldenummer: 89100834.4
(22) Anmeldetag: 19.01.1989
(51) Int. Cl.: G01K 7/18

(54) **Widerstandsthermometer**
Resistance thermometer
Thermomètre à résistance

(30) Priorität: 05.02.1988 DE 3803531
(43) Veröffentlichungstag der Anmeldung: 09.08.1989
(73) Patentinhaber: EPHY-MESS GESELLSCHAFT FÜR ELEKTRO-PHYSIKALISCHE MESSGERÄTE MBH, D-65205 Wiesbaden (DE)
(72) Erfinder: Becker, Andreas, D-6200 Wiesbaden 42 (DE)
(74) Vertreter: Weber, Dieter, Dr.

(56) Entgegenhaltungen:
- DE-A- 3 211 760
- DE-U- 8 802 130
- FR-A- 2 425 633
- US-A- 3 691 656

## Beschreibung

Elektrische Maschinen kleiner und großer Leistung müssen im Nieder- und Hochspannungsbereich vor thermischer Überlastung geschützt werden, um einen sicheren Betrieb und eine lange Lebensdauer zu gewährleisten. Als Meß- und Überwachungselemente für die thermische Überwachung und den Schutz rotierender elektrischer Maschinen sind Widerstandsthermometer aus FR-A- 2 425 633 bekannt, die einen länglichen Trägerkörper, einen auf ihm befestigten Widerstandsdraht und mit dem Widerstandsdraht gegebenenfalls über elektrisch leitende Zwischenstücke verbundene Anschlußkabel besitzen. Solche Widerstandsthermometer sind auch als Nutwiderstandsthermometer bekannt und werden mit dem Trägerkörper an den Meßstellen der Maschinen in entsprechende Ausnehmungen eingefügt. Sie arbeiten nach dem üblichen Prinzip der Widerstandsthermometer, die sich die Eigenschaft vieler Metalle zunutze machen, bei höheren Temperaturen den Strom schlechter als bei niedrigeren Temperaturen zu leiten. Der Widerstandsdraht ist im Regelfall ein Platindraht, kann aber auch ein Kupfer- oder Nickeldraht sein. Da sich mit der temperaturabhängigen Änderung des Widerstandes die Stromstärke eines den Widerstandsdraht durchfließenden Stromes proportional zur Temperaturveränderung ändert, kann mit der Messung der Stromstärke die Temperatur des Widerstandsdrahtes gemessen werden. Selbstverständlich müssen der Trägerkörper und alle den Widerstandsdraht bedeckenden Materialien eine gute Wärmeleitfähigkeit haben, um den Widerstandsdraht möglichst schnell die Temperatur seiner unmittelbaren Umgebung annehmen zu lassen.

Ein bei solchen Widerstandsthermometern stets auftretendes Problem ist jenes, daß bei Einbau der Widerstandsthermometer in die Maschinen und bei deren Handhabung die Gefahr besteht, daß durch unsachgemäße Behandlung die Anschlußkabel von dem Widerstandsdraht abgerissen werden, so daß die entsprechende Meßstelle unbrauchbar würde. Um dies zu verhindern, ist es bekannt, zusätzliche Fixierungen der Anschlußkabelenden, sogenannte Zugentlastungen, vorzusehen, um eine solche Unterbrechung der elektrischen Leitung zu verhindern.

Im Regelfall sind hierzu bei bekannten Widerstandsthermometern in den Nuten des Trägerkörpers, in denen die Enden der Anschlußkabel in den Trägerkörper eingeführt werden, Verbreiterungen vorgesehen, in die sich an den Anschlußkabelenden vorgesehene Lötperlen hineinlegen. Bei Zugausübung auf die Anschlußkabel bieten diese Zugentlastungen einen gewissen Schutz gegen ein Abreißen der Anschlußkabel von dem Widerstandsdraht, doch sind solche Zugentlastungen nicht zuverlässig genug, da die Lötperlen unterschiedliche Form und Dicke haben können und daher in bestimmten Fällen aus den Verbreiterungen herausgezogen werden können und dann keinen Schutz gegen Abreißen bieten oder im Falle flexibler Trägerkörper ein Biegen desselben zum Abreißen führen kann.

Es sind auch bereits Widerstandsthermometer dieser Art bekannt, die mit einer harzgetränkten Glimmerpapierumwicklung versehen sind. Bei solchen Widerstandsthermometern kann eine zusätzliche formschlüssige Fixierung der Anschlußkabelenden entfallen, da durch starke Pressung des Glimmerpapiers eine ausreichende Fixierung erfolgt. Solche Widerstandsthermometer sind allerdings starr.

Für viele Einsatzgebiete ist es erwünscht, flexible Widerstandsthermometer dieser Art zu bekommen, da sie leichter einbaubar sind, auch an gewölbten Oberflächen eingebaut werden können und unempfindlicher gegenüber Druck, Schlag und Zug sind. Bei Widerstandsthermometern mit flexiblen Trägerkörpern kann keine ausreichende Pressung vorgenommen werden, um eine zusätzliche Fixierung der Anschlußkabelenden überflüssig zu machen, und die bekannten formschlüssigen Zugentlastungen, bei denen eine Lötperle in einer Nutverbreiterung liegt, sind hier noch weniger zuverlässig, da beim Biegen des Trägerkörpers das Herausgleiten der Lötperle aus der Nutverbreiterung oder Abreißen noch begünstigt wird.

Die der Erfindung zugrundeliegende Aufgabe bestand nun darin, Widerstandsthermometer mit einer zuverlässigen Zugentlastung zu bekommen, insbesondere dann, wenn es sich um Widerstandsthermometer mit flexiblen Trägerkörpern handelt.

Erfindungsgemäß wird diese Aufgabe mit einem Widerstandthermometer mit einem länglichen Trägerkörper, einem auf oder in ihm befestigten Widerstandsdraht und mit dem Widerstandsdraht gegebenenfalls über elektrisch leitende Zwischenstücke verbundenen Anschlußkabeln gelöst, das dadurch gekennzeichnet ist, daß der Trägerkörper im Bereich der Anschlußkabelverbindung zwei von einem Quersteg durchdrungene durchgehende Öffnungen aufweist, die Anschlußkabel von der einen Seite und der Widerstandsdraht bzw. die Zwischenstücke von der entgegengesetzten Seite die Querstege in den Öffnungen in Form einer Schleife wenigstens teilsweise umgreifen und die Anschlußkabel mit dem Widerstandsdraht bzw. den Zwischenstücken im Bereich der Schleifen miteinander verlötet sind.

Die so gekennzeichnete erfindungsgemäße Fixierung der Anschlußkabelenden bietet eine ausgezeichnete Zugentlastung, die ein Abreißen der Anschlußkabelenden von den Widerstandsdrahtenden verhindert. Dabei ist weiter zu berücksichtigen, daß beim Zusammenbau des Widerstandsthermometers die genannten Öffnungen im Trägerkörper, soweit diese nicht anderweitig ausgefüllt sind, mit Vergußmasse vollständig ausgefüllt werden, so daß die Verlötung der Anschlußkabelenden mit den Enden des Widerstandsdrahtes bzw. der Zwischenstücke in Vergußmasse eingebettet ist.

Die erfindungsgemäße Zugentlastung ist grundsätzlich für jede Art dieser in Rede stehenden Widerstandsthermometer geeignet, wie beispielsweise für Widerstandsthermometer mit Meßwendel. Besonders geeignet ist diese Zugentlastung jedoch für Widerstandsthermometer mit bifilarer Wicklung, bei denen der Widerstandsdraht in zwei nebeneinanderliegenden Einkerbungen eingehängt, in doppelter Lage spiralförmig um den Trägerkörper gewickelt ist, so daß sich die beiden Anschlußenden des Widerstandsdrahtes an einem Ende des Trägerkörpers befinden. Bifilare Wicklungen sind induktionsfrei.

Bei bestimmten Anwendungsfällen können die Querstege die gleiche Dicke wie der Trägerkörper haben, doch ist dann die Gesamtdicke des Widerstandsthermometers im Bereich dieser Querstege größer als in den übrigen Bereichen, da dann die Schleifen der Anschlußkabel des Widerstandsdrahtes bzw. der Zwischenstücke beidseitig überstehen. Aus diesem Grund ist es zweckmäßig, daß die Querstege eine geringere Dicke als der Trägerkörper haben. Besonders zweckmäßig ist es, wenn die Querstege nur so dick sind, daß sich die Anschlußkabel und der Widerstandsdraht bzw. die Zwischenstücke zwischen dem Widerstandsdraht und den Anschlußkabeln mit ihren Schleifenwindungen vollständig in den verbleibenden Hohlraum um die Querstege herum einpassen und nicht über die Dicke des Trägerkörpers hinausstehen. Hierzu sollte die Gesamtdicke der Querstege zuzüglich zweier Lagen der Anschlußkabel bzw. Zwischenstücke, je nachdem, welche von ihnen die größere Dicke haben, höchstens die Dicke des Trägerkörpers haben.

Wenn die Querstege die gleiche Dicke wie der Tägerkörper haben, können die von den Querstegen durchdrungenen Öffnungen des Trägerkörpers einfach aus zwei voneinander beabstandeten Stanzlöchern bestehen, deren Abstand der Quersteg bildet. Bevorzugt ist es aber, besonders wenn die Querstege dünner als der Trägerkörper sind, als Öffnungen zwei parallele Längsschlitze zu haben, die jeweils von einem Quersteg durchdrungen sind.

Die Anschlußkabel und der Widerstandsdraht bzw. die Zwischenstücke können um die Querstege jeweils in mehreren Wicklungen herumgelegt werden. Aus Gründen der einfacheren Montage ist es aber zweckmäßig, wenn sie die Querstege in Form einer offenen Schleife nur als eine unvollständige Wicklung umgreifen, vorzugsweise derart, daß von jedem der Kabel oder Drähte der Quersteg an seiner Ober- und Unterseite und einer Seitenkante, nicht aber an der zweiten Seitenkante umgriffen wird. Ein solche Anordnung ist leicht zu montieren und reicht für die erwünschte Festigkeit der Zugentlastung völlig aus.

Jeder der Querstege kann von einem oder mehreren Anschlußkabeln umgriffen sein, wie dies bekannt ist. Bekanntermaßen haben derartige Widerstandsthermometer zwei, drei oder vier Anschlußkabel, so daß jeder Quersteg erfindungsgemäß gewöhnlich von ein oder zwei Anschlußkabeln umgriffen ist.

Einer weiteren Verbesserung der Zugentlastung und damit Lösung der Aufgabe dienen zweckmäßig zusätzliche durchgehende Öffnungen im Trägerkörper auf der Seite der Querstege, auf welcher die Anschlußkabel eingeführt sind, wobei durch diese weiteren Öffnungen die Anschlußkabel schikanenartig hindurchgeführt sind. Zweckmäßig handelt es sich dabei um jeweils mindestens zwei in Richtung der Anschlußkabel hintereinanderliegende durchgehende Löcher, durch die ein Anschlußkabel einmal von oben und einmal von unten hindurchgeführt ist. Damit auch in diesem Bereich die Anschlußkabel nicht über die Dicke des Trägerkörpers hinausragen, ist es bevorzugt, daß sich die Querbrücken zwischen diesen zusätzlichen Öffnungen und die Querbrücke zwischen der dem Quersteg am nächsten liegenden zusätzlichen Öffnung sowie der den Quersteg aufnehmenden Öffnungen geringere Dicken als der Trägerkörper haben, so daß sich auch in diesen Bereichen die Anschlußkabel in den Trägerkörper hineinlegen.

Die Elastizität des Anschlusses zwischen den Anschlußkabeln und dem Widerstandsdraht und damit die Zugentlastung werden weiterhin dadurch erhöht, daß Zwischenstücke zwischen dem Widerstandsdraht und den Anschlußkabeln in Form von Drahtstücken, wie z. B. Kupferdrähten, vorgesehen sind. Diese liegen vor dem Einfügen der Vergußmasse frei in Nuten im Trägerkörper zwischen ihren Anschlußstellen mit den Anschlußkabeln und ihren Anschlußstellen mit dem Widerstandsdraht. Auf diese Weise sind die Zwischenstücke geeignet, zusätzlich Deformations- oder Zugbelastungen aufzunehmen und die Verbindungsstelle mit dem Widerstandsdraht so weiter zu entlasten.

Diese Funktion wird insbesondere dann erfüllt, wenn der Trägerkörper aus einem Aufnahmekörper mit einer Längsnut und einem in der Längsnut liegenden Einsatzkörper besteht, wobei der Widerstandsdraht mit dem Einsatzkörper verbunden ist, beispielsweise und zweckmäßig in Form einer bifilaren Wicklung um diesen Einsatzkörper spiralförmig herumgewickelt ist. Vor dem Einfügen der Vergußmasse liegt somit der Einsatzkörper mit dem daran befestigten Widerstandsdraht lose in der Längsnut des Aufnahmekörpers und ist daher bei Zugausübung in Längsrichtung beweglich.

Wenn nun in zweckmäßiger Weise die Zwischenräume zwischen dem Aufnahmekörper und dem Einsatzkörper mit einer flexiblen oder elastischen Vergußmasse ausgefüllt sind, kann trotz dieser Festlegung bei Zugausübung noch eine gewisse Längsbewegung und damit Aufnahme von Zugkräften möglich sein.

Auch einer hervorragenden Fixierung der Verbindung zwischen dem Widerstandsdraht und den Anschlußkabeln dient eine besondere Ausbildung der Verbindung zwischen dem Widerstandsdraht und den Zwischenstücken, sofern solche zweckmäßigerweise vorgesehen sind. Hierzu sind die zu dem Widerstandsdraht hinweisenden Enden der Zwischenstücke ösenartig umgebogen, wobei die Enden des Widerstandsdrahtes diese ösenartigen Umbiegungen umgreifen und in diesem Bereich mit den ösenartigen Umbiegungen mit einer satten Lötperle verlötet sind.

Schließlich dient es ebenfalls einer Lösung der Zugentlastung, wenn auch die dem Widerstandsdraht zugewandten Enden der Zwischenstücke im Bereich zwischen deren Verbindung mit dem Widerstandsdraht und den Querstegen zusätzlich fixiert sind, indem in diesem Bereich der Einsatzkörper zusätzliche Öffnungen aufweist, durch die die Zwischenstücke analog den Anschlußkabeln schikanenartig hindurchgeführt sind.

Nachdem die Verbindungen erfindungsgemäß zwischen den Anschlußkabelenden und den Enden des Widerstandsdrahtes, zweckmäßig über drahtförmige Zwischenstücke verlötet sind, nachdem im Falle der bevorzugten Ausführungsform der Einsatzkörper in die Längsnut des Aufnahmekörpers eingelegt ist, werden sämtliche Hohlräume mit einer flexiblen oder elastischen Füllstoffvergußmasse ausgegossen, wobei nicht nur die Hohlräume zwischen dem Aufnahmekörper und dem Einsatzkörper, sondern auch die verschiedenen Öffnungen im Einsatzkörper und im Aufnahmekörper mit Vergußmasse gefüllt werden. Diese Vergußmasse soll günstigerweise nicht nur flexibel sein, sondern auch eine hohe Wärmeleitfähigkeit und Temperaturbeständigkeit sowie einen relativ hohen Erweichungspunkt haben. Die Vergußmasse soll verhindern, daß bei der späteren Imprägnierung der Maschine durch ein Vakuumtränkverfahren oder Träufelverfahren Tränkharz in Hohlräume des Thermometers eindringt.

Da die Vergußmasse die Lötstellen einschließt, verhindert sie auf diese Weise ein Weglaufen des Lotes, falls das bei etwa 235 °C schmelzende Lot während der Verwendung einmal auf diese Temperatur gebracht werden und daher schmelzen sollte. Durch die bei dieser Temperatur noch nicht erweichende oder schmelzende Vergußmasse würde in einem solchen Ausnahmefall das Lot an seiner Stelle gehalten werden, so daß beim anschließenden Abkühlen die Lötverbindung wieder voll hergestellt wird.

Nach dem Vergießen wird der Trägerkörper noch zum zusätzlichen Schutz des Widerstandsdrahtes mit einem Abdeckstreifen über die ganze Länge des Trägerkörpers bedeckt. Auf der Unterseite des Trägerkörpers wird im Bereich der Anschlußkabelverbindung eine elektrisch isolierende, temperaturbeständige Isolierfolie als weiterer Abdeckstreifen angebracht.

Als Vergußmasse wird zweckmäßig eine flexible, temperaturbeständige Dichtmasse, vorzugsweise eine Silikondichtmasse verwendet. Die Einzelkomponenten des Trägerkörpers bestehen zweckmäßig aus einer harzgetränkten Faserverstärkung, vorzugsweise einem silikonharzgetränkten Glashartgewebe.

Der Widerstandsdraht ist in bekannter Weise zweckmäßig ein Platindraht, der von elektrisch isolierender Glasseide umsponnen ist. Die Zwischenstücke bestehen günstigerweise aus Kupferdrahtstücken, besonders aus versilberten Kupfereinzellitzen. Auch die Anschlußkabel sind zweckmäßig versilberte Kupferlitzen, die in üblicher Weise isoliert sind, wie beispielsweise durch Polytetrafluorethylenkunststoff. Günstigerweise wird das gesamte Widerstandsthermometer nach seinem Zusammenbau und der Vulkanisierung oder Vernetzung der Vergußmasse in einen wärmeschrumpfenden Kunststoff, besonders in Polytetrafluorethylenkunststoff, eingeschrumpft.

Durch die Zeichnung wird die Erfindung weiter erläutert. In dieser bedeuten:
- Fig. 1: eine Draufsicht auf eine Ausführungsform des erfindungsgemäßen Widerstandsthermometers vor dem Vergießen mit der Vergußmasse und vor dem Aufschrumpfen der Schrumpffolie,
- Fig. 2: einen senkrechten Schnitt durch die in Fig. 1 dargestellte Ausführungsform entlang der Linie A-B in zehnfacher Vergrößerung,
- Fig. 3: einen senkrechten Schnitt entlang der Linie C-D in Fig. 1 in zehnfacher Vergrößerung und
- Fig. 4: eine Draufsicht auf das erfindungsgemäße Widerstandsthermometer gemäß Fig. 1 nach Fertigstellung und Aufschrumpfen der Schrumpffolie.

Bei dem in der Zeichnung gezeigten Widerstandsthermometer besteht der Trägerkörper 1 aus einem Aufnahmekörper 2 und einem Einsatzkörper 3. Dieser Einsatzkörper 3 besitzt zwei nebeneinanderliegende Einkerbungen 4, in die der doppellagige Widerstandsdraht 5 eingehängt ist. Der Widerstandsdraht 5 ist dort ausgehend über die Länge des Einsatzkörpers 3 bililar gewickelt, so daß seine beiden Enden im Bereich der ösenartigen Umbiegungen 6 der drahtartigen Zwischenstücke 7 liegen. Letztere sind durch durchgehende Öffnungen 8 im Einsatzkörper 3 schikanenartig geführt.

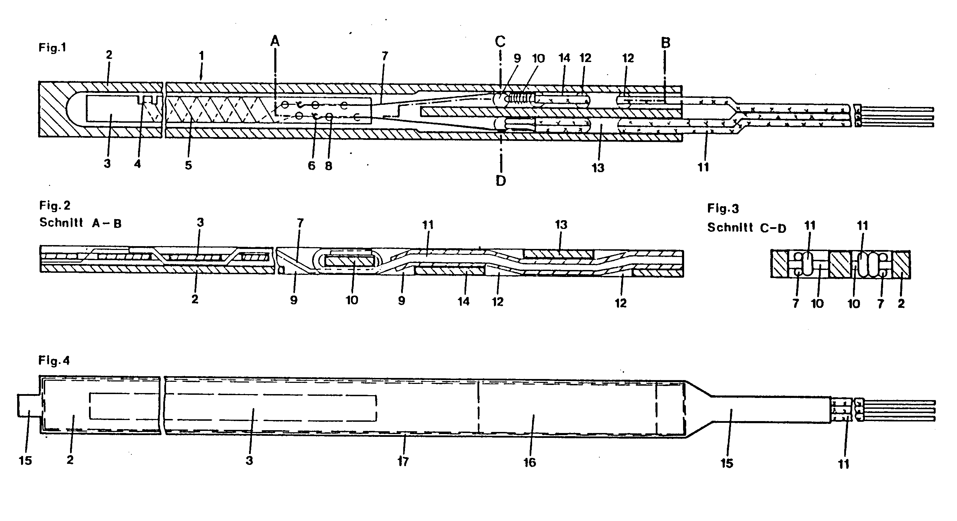

Der Aufnahmekörper 2 besitzt, wie insbesondere Fig. 2 deutlich veranschaulicht, in seinem Endbereich zwei parallele Längsschlitze 9 mit jeweils einem Quersteg 10, dessen Dicke wesentlich geringer als die Dicke des Aufnahmekörpers 2 ist.

Die Enden der Zwischenstücke 7 sind als eine offene Schleife um den Quersteg 10 herumgeschlungen, während die Anschlußkabel 11 von der anderen Seite kommend zunächst schikanenartig durch die zusätzlichen Öffnungen 12 im Endbereich des Aufnahmekörpers 2 hindurchgeführt und dann mit ihren äußeren Enden als offene Schleife um den Quersteg 10 herumgeführt sind. In dem abgebildeten Ausführungsbeispiel handelt es sich um drei Anschlußkabel 11, wobei ein Quersteg von zwei Anschlußkabeln und ein Quersteg von einem Anschlußkabel umgriffen wird.

Wie Fig. 2 zeigt, sind die Querbrücken 13, 14 zwischen den Öffnungen 12 und zwischen der zweiten Öffnung 12 sowie der Öffnung 9 dünner als die Dicke des Aufnahmekörpers 2, so daß die Anschlußkabel 11 sich in den Aufnahmekörper 2 einschmiegen.

In den Fig. 1 bis 3 sind der Deutlichkeit halber die Lötstellen weggelassen worden. Man muß sich jedoch vorstellen, daß im Bereich der Querstege 10 die Enden der Zwischenstücke 7 und der Anschlußkabel 11 sowie im Bereich der ösenartigen Umbiegungen 6 die Enden der Zwischenstücke 7 und des Widerstandsdrahtes 5 miteinander verlötet sind.

Nach diesem Verlöten und Ausfüllen aller Hohlräume mit einer flexiblen oder elastischen Vergußmasse wird ein flexibler Abdeckstreifen 17 aufgelegt sowie auf der Unterseite des Trägerkörpers 1 im Bereich der Anschlußkabelverbindung eine Isolierfolie als Abdeckstreifen 16 angebracht und dann die Gesamtheit mit einem wärmeschrumpfenden Kunststoff 15 überzogen, so daß das fertige Widerstandsthermometer die in Fig. 4 wiedergegebene Gestalt besitzt.

## Patentansprüche

1. Widerstandsthermometer mit einem länglichen Trägerkörper, einem auf oder in ihm befestigten Widerstandsdraht und mit dem Widerstandsdraht gegebenenfalls über elektrisch leitende Zwischenstücke verbundenen Anschlußkabeln, **dadurch gekennzeichnet,** daß der Trägerkörper (1) im Bereich der Anschlußkabelverbindung von jeweils einem Quersteg (10) durchdrungene, durchgehende Öffnungen (9) aufweist, die Anschlußkabel (11) von der einen Seite und der Widerstandsdraht (5) bzw. die Zwischenstücke (7) von der entgegengesetzten Seite die Querstege (10) in den Öffnungen (9) in Form einer Schleife wenigstens teilweise umgreifen und die Anschlußkabel (11) mit dem Widerstandsdraht (5) bzw. den Zwischenstücken (7) im Bereich der Schleifen miteinander verlötet sind.

2. Widerstandsthermometer nach Anspruch 1, **dadurch gekennzeichnet,** daß die Querstege (10) eine geringere Dicke als der Trägerkörper (1) haben.

3. Widerstandsthermometer nach Anspruch 1 oder 2, **dadurch gekennzeichnet,** daß die Öffnungen (9) die Form zweier paralleler Längsschlitze haben, die von jeweils einem Quersteg (10) durchdrungen sind.

4. Widerstandsthermometer nach einem der Ansprüche 1 bis 3, **dadurch gekennzeichnet,** daß die Anschlußkabel (11) und/oder der Widerstandsdraht (5) bzw. die Zwischenstücke (7) die Querstege (10) in Form einer offenen Schleife als eine unvollständige Wicklung umgreifen.

5. Widerstandsthermometer nach einem der Ansprüche 1 bis 4, **dadurch gekennzeichnet,** daß auf der Anschlußkabelseite der Querstege (10) der Trägerkörper (1) weitere durchgehende Öffnungen (12) aufweist, durch die die Anschlußkabel (11) schikanenartig hindurchgeführt sind, und zwischen diesen Öffnungen (12) und zwischen der von dem Quersteg durchdrungenen Öffnung (9) und der benachbarten Öffnung (12) Querbrücken (13, 14) liegen.

6. Widerstandsthermometer nach Anspruch 5, **dadurch gekennzeichnet,** daß die Querbrücken (13, 14) eine geringere Dicke als der Trägerkörper (1) haben.

7. Widerstandthermometer nach einem der Ansprüche 1 bis 6, **dadurch gekennzeichnet,** daß Zwischenstücke (7) in Form von Drahtstücken vorgesehen sind und der Trägerkörper (1) aus einem Aufnahmekörper (2) mit einer Längsnut und einem in der Längsnut liegenden Einsatzkörper (3) besteht, wobei der Widerstandsdraht (5) mit dem Einsatzkörper (3) verbunden ist und die Zwischenräume zwischen dem Aufnahmekörper und dem Einsatzkörper mit einer flexiblen Vergußmasse ausgefüllt sind.

8. Widerstandsthermometer nach Anspruch 7, **dadurch gekennzeichnet,** daß die dem Widerstandsdraht (5) zugewandten Enden der Zwischenstücke (7) ösenartig umgebogen sind, die Enden des Widerstandsdrahtes (5) die ösenartigen Umbiegungen (6) umgreifen und mit diesen verlötet sind.

9. Widerstandsthermometer nach Anspruch 7 oder 8, **dadurch gekennzeichnet,** daß der Einsatzkörper (3) an seinem den Querstegen (10) zugewandten Ende durchgehende Öffnungen (8) aufweist, durch die die Zwischenstücke (7) schikanenartig hindurchgeführt sind.

10. Widerstandsthermometer nach einem der Ansprüche 1 bis 9, **dadurch gekennzeichnet,** daß der Widerstandsdraht (5) in Form einer bifilaren Wicklung mit dem Trägerkörper (1) verbunden ist.

11. Widerstandsthermometer nach einem der Ansprüche 1 bis 10, **dadurch gekennzeichnet,** daß alle seine Hohlräume mit einer flexiblen oder elastischen Vergußmasse ausgefüllt sind.

12. Widerstandsthermometer nach einem der Ansprüche 1 bis 11, **dadurch gekennzeichnet,** daß der Trägerkörper wenigstens auf einer seiner beiden Seiten wenigstens teilweise mit einem Abdeckstreckstreifen (16, 17) bedeckt ist.

13. Widerstandsthermometer nach einem der Ansprüche 1 bis 12, **dadurch gekennzeichnet,** daß sein gegebenenfalls mit Abdeckstreifen (16, 17) bedeckter Trägerkörper (1) und die Anschlußkabeleinführung in den Trägerkörper von einer elektrisch isolierenden und wärmeleitfähigen Hülle (15), insbesondere einem wärmeschrumpfenden Kunststoff umgeben sind.

## Claims

1. A resistance thermometer comprising an elongate carrier body, a resistance wire feed on or in the carrier body, and connecting cables which are connected to the resistance wire possibly by way of electrically conductive intermediate portions, characterised in that in the region of the connecting cable connection the carrier body (1) has openings (9) which pass therethrough and through each of which extends a respective transverse limb (10), the connecting cables (11) from the one side and the resistance wire (5) or the intermediate portions (7) from the opposite side at least partially embrace the transverse limbs (10) in the openings (9) in the form of a loop and the connecting cables (11) are soldered to the resistance wire (5) or the intermediate portions (7) respectively in the region of the loops.

2. A resistance thermometer according to claim 1 characterised in that the transverse limbs (10) are of smaller thickness than the carrier body (1).

3. A resistance thermometer according to claim 1 or claim 2 characterised in that the openings (9) are in the form of two parallel longitudinal slots through each of which passes a respective transverse limb (10).

4. A resistance thermometer according to one of claims 1 to 3 characterised in that the connecting cables (11) and/or the resistance wire (5) or the intermediate portions (7) respectively embrace the transverse limbs (10) in the form of an open loop as an incomplete winding.

5. A resistance thermometer according to one of claims 1 to 4 characterised in that on the connecting cable side of the transverse limbs (10) the carrier body (1) has further openings (12) which pass therethrough and through which the connecting cables (11) are passed in a chicane-like configuration, and transverse bridges (13, 14) are disposed between said openings (12) and between the opening (9) through which the transverse limb extends and the adjacent opening (12).

6. A resistance thermometer according to claim 5 characterised in that the transverse bridges (13, 14) are of smaller thickness than the carrier body (1).

7. A resistance thermometer according to one of claims 1 to 6 characterised in that there are provided intermediate portions (7) in the form of wire portions and the carrier body (1) comprises a mounting body (2) having a longitudinal groove and an insert body (3) which is disposed in the longitudinal groove, wherein the resistance wire (5) is connected to the insert body (3) and the intermediate spaces between the mounting body and the insert body are filled with a flexible casting material.

8. A resistance thermometer according to claim 7 characterised in that the ends of the intermediate portions (7), which are towards the resistance wire (5), are bent over in an eye-like configuration, and the ends of the resistance wire (5) embrace the eye-like bent-over portions (6) and are soldered to same.

9. A resistance thermometer according to claim 7 or claim 8 characterised in that at its end which is towards the transverse limbs (10) the insert body (3) has openings (8) which pass therethrough and through which the intermediate portions (7) are passed in a chicane-like configuration.

10. A resistance thermometer according to one of claims 1 to 9 characterised in that the resistance wire (5) is connected in the form of a bifilar winding to the carrier body (1).

11. A resistance thermometer according to one of claims 1 to 10 characterised in that all its cavities are filled with a flexible or elastic casting material.

12. A resistance thermometer according to one of claims 1 to 11 characterised in that the carrier body, on at least one of its two sides, is at least partially covered with a cover section strip (16, 17).

13. A resistance thermometer according to one of claims 1 to 12 characterised in that its carrier body (1) which is possibly covered with cover strips (16, 17) and the connecting cable intake into the carrier body are enclosed by an electrically insulating and heat-conductive sheath (15), in particular a heat-shrink plastics material.

## Revendications

1. Thermomoètre à résistance comportant un corps de support allongé, un fil de résistance fixé sur ou dans ce corps, et des câbles de raccordement éventuellement raccordés au fil de résistance par l'intermédiaire d'éléments intermédiaires électriquement conducteurs, caractérisé en ce que le corps de support (1) possède, dans la zone de la liaison des câbles de raccordement, des ouvertures traversantes (9), qui sont traversées respectivement par une barrette transversale (10), les câbles de raccordement (11) sur un côté et le fil de résistance (5) ou les éléments intermédiaires (7) sur le côté opposé enserrent au moins partiellement les barrettes transversales (10) situées dans les ouvertures (9) en formant une boucle, et les câbles de raccordement (11) ainsi que le fil de résistance (5) ou les éléments intermédiaires (7) sont réunis entre eux par brasage au niveau des boucles.

2. Thermomètre à résistance selon la revendication 1, caractérisé en ce que les barrettes transversales (10) possèdent une épaisseur inférieure à celle du corps de support (1).

3. Thermomètre à résistance selon la revendication 1 ou 2, caractérisé en ce que les ouvertures (9) possèdent la forme de deux fentes longitudinales parallèles, qui sont traversées respectivement par une barrette transversale (10).

4. Thermomètre à résistance selon l'une des revendications 1 à 3, caractérisé en ce que le câble de raccordement (11) et/ou le fil de résistance (5) ou les éléments intermédiaires (7) enserrent les barrettes transversales (10) sous la forme d'une boucle ouverte à la manière d'un enroulement incomplet.

5. Thermomètre à résistance selon l'une des revendications 1 à 4, caractérisé en ce que sur le côté des barrettes transversales (10) tourné vers les câbles de raccordement, le corps de support (1) possède d'autres ouvertures traversantes (12), dans lesquelles les câbles de raccordement (11) s'étendent à la manière de chicanes, et des étriers transversaux (13,14) s'étendent entre ces ouvertures (12) et entre l'ouverture (9) traversée par la barrette transversale, et l'ouverture voisine (12).

6. Thermomètre à résistance selon la revendication 5, caractérisé en ce que les ponts transversaux (13,14) possèdent une épaisseur inférieure à celle du corps de support (1).

7. Thermomètre à résistance selon l'une des revendications 1 à 6, caractérisé en ce que les éléments intermédiaires (7) sont prévus sous la forme d'éléments de fil et le corps de support (1) est constitué par un corps de logement (2) comportant une rainure longitudinale et un insert (3) situé dans la rainure longitudinale, le fil de résistance (5) étant raccordé à l'insert (3), et les espaces intercalaires présents entre le corps de logement et l'insert étant remplis par une masse d'obturation flexible.

8. Thermomètre à résistance selon la revendication 7, caractérisé en ce que les extrémités, tournées vers le fil de résistance (5), des éléments intermédiaires (7) sont repliés sous la forme d'oeillets, et les extrémités du fil de résistance (5) enserrent les parties repliées en forme d'oeillets (6) et sont fixées par brasage à ces dernières.

9. Thermomètre à résistance selon la revendication 7 ou 8, caractérisé en ce que l'insert (3) comporte, sur son extrémité tournée vers les barrettes transversales (10), des ouvertures traversantes (8), dans lesquelles les éléments intermédiaires (7) s'étendent à la manière de chicanes.

10. Thermomètre à résistance selon l'une des revendications 1 à 9, caractérisé en ce que le fil de résistance (5) est raccordé, sous la forme d'un enroulement bifilaire, au corps de support (1).

11. Thermomètre à résistance selon l'une des revendications 1 à 10, caractérisé en ce que toutes ses cavités sont remplies par une masse d'obturation flexible ou élastique.

12. Thermomètre à résistance selon l'une des revendications 1 à 11, caractérisé en ce que le corps de support est recouvert, au moins sur l'une de ses deux côtés, au moins partiellement par une bande extensible de revêtement (16, 17).

13. Thermomètre à résistance selon l'une des revendications 1 à 12, caractérisé en ce que son corps de support (1), recouvert éventuellement par des bandes de revêtement (16,17), et la partie d'introduction du câble de raccordement dans le corps de support sont entourés par une gaine électriquement isolante et thermoconductrice (15), en particulier une matière plastique thermorétractable.
